# EUROPÄISCHE PATENTSCHRIFT

(11) **EP 1 287 610 B1**
(45) Veröffentlichungstag und Bekanntmachung des Hinweises auf die Patenterteilung: **21.04.2010**
(21) Anmeldenummer: 01936417.3
(22) Anmeldetag: 01.06.2001
(51) Int. Cl.: H02P 7/29, H02H 7/085, E05F 15/16

(54) **VERFAHREN ZUM BESTIMMEN DER POSITION EINES DURCH DIE ANTRIEBSWELLE EINES GLEICHSTROMMOTORS ANGETRIEBENEN ELEMENTS**
METHOD FOR DETERMINING THE POSITION OF AN ELEMENT DRIVEN BY THE DRIVE SHAFT OF A DIRECT CURRENT MOTOR
PROCEDE POUR LA DETERMINATION DE LA POSITION D'UN ELEMENT ENTRAINE PAR L'ARBRE D'ENTRAINEMENT D'UN MOTEUR A COURANT CONTINU

(30) Priorität: 06.06.2000 DE 10028038
(43) Veröffentlichungstag der Anmeldung: 05.03.2003
(73) Patentinhaber: Leopold Kostal GmbH & Co. KG, 58507 Lüdenscheid (DE)
(72) Erfinder: OTTE, Stefan, 45549 Sprockhövel (DE)
(86) Internationale Anmeldenummer: PCT/EP2001/006221
(87) Internationale Veröffentlichungsnummer: WO 2001/095474

(56) Entgegenhaltungen:
- DE-A- 4 135 873
- DE-A- 4 326 216
- DE-A- 19 527 456
- DE-A1- 19 619 971
- DE-C1- 19 855 996
- DE-U1- 29 510 688

## Beschreibung

Die Erfindung betrifft ein Verfahren zum Bestimmen der Position eines durch die Antriebswelle eines Gleichstrommotors angetriebenen Elements innerhalb einer vorbestimmten Bewegungsstrecke zwischen zwei die Bewegungsstrecke begrenzenden Blockpositionen durch Auswerten der im Ankerstromsignal enthaltenen Stromrippel, bei dem bei einer Bewegung des angetriebenen Elements in eine definierte Blockposition eine systemseitige Normierung durchgeführt wird.

Das Ankerstromsignal eines Gleichstrommotors umfaßt einen sogenannten Gleichanteil sowie einen den Gleichanteil überlagernden Wechselanteil. Der Wechselanteil entsteht bei einem Betrieb des Gleichstrommotors infolge des Zusammenwirkens von Magnet (Feld), Ankerwicklung und Kommutator des Gleichstrommotors. Dies äußert sich in einer kurzzeitigen Änderung der induzierten Spannung, woraus sich die Welligkeit des Ankerstromsignals ergibt. Die in dem Ankerstromsignal enthaltenen, in der beschriebenen Weise bedingten Stromspitzen - im folgenden Stromrippel genannt - treten bei einer Umdrehung des Ankers in einer der Anzahl der Kollektorlamellen entsprechenden Häufigkeit auf. Weist beispielsweise der Anker 10 Kollektorlamellen auf, sind im Ankerstromsignal entsprechend 10 Stromrippel zu erkennen. Eine Zählung der Stromrippel kann somit Aufschluß über die aktuelle Drehstellung des Ankers des Gleichstrommotors und somit bezüglich des beweglichen Elements innerhalb seiner vorbestimmten Bewegungsstrecke geben. Zu diesem Zweck wird das analoge Ankerstromsignal digitalisiert, um eine entsprechende Zählung vornehmen zu können.

Da vorbekannt ist, über wie viele Stromrippel der Gleichstrommotor sich drehen muß, bis die Strecke zwischen den beiden, die Bewegungsstrecke begrenzenden Blockpositionen zurückgelegt ist, kann über die Zählung der Stromrippel eine Positionsbestimmung des angetriebenen Elements erfolgen. Eingesetzt werden derartige Verfahren beispielsweise im Kraftfahrzeugbereich zum Steuern eines Verstellantriebes, wie sie beispielsweise für Fensterheber und/oder Schiebedächer vorgesehen sind. Ein wesentliches Element in der Erfassung der Position beispielsweise der Scheibe ist diejenige beim Schließen derselben, bei der der Einklemmschutz abgeschaltet werden kann. Eine solche Abschaltung ist notwendig, damit die Scheibe vollständig in ihren oberen Block und in die dort vorgesehenen Dichtungen einfahren kann, ohne daß infolge der erhöhten Last eine Motorabschaltung erfolgt. Bei einer fehlerhaften Zählung der Stromrippel zur Bestimmung der Position der Scheibe kann es vorkommen, daß der Einklemmschutz zu früh oder zu spät abgeschaltet wird.

Zur Erhöhung der Bestimmung der Positionsgenauigkeit des beweglichen Elements, beispielsweise einer Fensterscheibe eines Kraftfahrzeuges erfolgt eine systemseitige Normierung bzw. Renormierung, wenn das Fenster in seine obere Blockposition eingefahren worden ist, da nunmehr eine tatsächliche Übereinstimmung der IST-Position der Scheibe und der mechanisch definierten Blockposition gegeben ist. Durch diese Renormierung wird der Stromrippelzähler wieder auf null zurückgesetzt, damit eine Fehleraddition über einen längeren Zeitraum verhindert ist. Auch wenn durch derartige Renormierungsmaßnahmen eine genaue Positionsbestimmung des angetriebenen Elements über einen längeren Zeitraum grundsätzlich durchgeführt werden kann, ist eine solche Renormierung jedoch unzureichend, wenn sich nach einem Einfahren des angetriebenen Elements in die Blockposition die zur Renormierung vorgesehene Blockposition tatsächlich jedoch nicht mit der mechanisch definierten Blockposition übereinstimmt. Dies ist beispielsweise dann der Fall, wenn beim Einfahren des angetriebenen Elements in die Blockposition dieses von dem als Anschlag dienenden Block zurückspringt. Das angetriebene Element befindet sich sodann in einer Position (IST-Position), die unterschiedlich zu der mechanisch definierten Blockposition (SOLL-Position) ist. Wird das System nunmehr bezüglich dieser Position des angetriebenen Elements nachnormiert, mit der Annahme, das angetriebene Element befinde sich in seiner mechanisch definierten Blockposition, dann ist die Nachnormierung fehlerhaft und entsprechend auch die nachfolgenden Zählergebnisse. Eine Positionserfassung des angetriebenen Elements ist dann ungenau und insbesondere sind einzelne Positionen innerhalb der Bewegungsstrecke des angetriebenen Elements nicht mit der notwendigen Genauigkeit wiederholbar anfahrbar, da infolge der Zufälligkeit etwa des Zurückspringens des angetriebenen Elements eine Normierung unter Zugrundelegung jeweils unterschiedlicher Voraussetzungen erfolgt. Die Folge eines solchen Verhaltens des angetriebenen Elements ist, das ein solches gattungsgemäßes Verfahren nur eingesetzt werden kann, wenn die beim Einfahren in die Blockposition sich ergebenden mechanischen Ungenauigkeiten vernachlässigbar klein sind.

Die Offenlegungsschrift DE 196 19 971 A1 zeigt ein Verfahren zum Bestimmen der Position eines durch die Antriebswelle eines Gleichstrommotors angetriebenen Elements innerhalb einer vorbestimmten Bewegungsstrecke durch Auswerten der im Ankerstromsignal enthaltenen Stromrippel.

Die Gebrauchsmusterschrift DE 295 10 688 U1 offenbart eine Steuervorrichtung für einen Fensterheberantrieb, bei der kurz vor Erreichen der völligen Schließstellung der Fensterscheibe ein Abschalten des Antriebs, sowie ein nachfolgendes Wiedereinschalten desselben im Sinne einer kurzen End-Bewegung zum Erreichen der Endposition ohne wesentliche Stoßbelastung erfolgt.

Ausgehend von diesem diskutierten Stand der Technik liegt der Erfindung daher die Aufgabe zugrunde, ein eingangs genanntes gattungsgemäßes Verfahren dergestalt weiterzubilden, daß die beim vorbekannten Stand der Technik auftretenden Fehler beim Nachnormieren in einer Blockposition auch bei Anwendungen, bei denen das angetriebene Element mit hoher kinetischer Energie bewegt wird, vernachlässigbar klein sind.

Diese Aufgabe wird erfingdungsgemäß dadurch gelöst, dass beim Einfahren des angetriebenen Elements in eine Blockposition der Gleichstrommotor vor Erreichen der systemseitig definierten Blockposition stromlos und damit in einen Generatorbetrieb geschaltet wird, um über das von dem Gleichstrommotor generierte Stromsignal das Auslaufen des Gleichstrommotors beobachten zu können, und nach einer vorbestimmten Zeitspanne, wenn der Auslauf des Ankers infolge der zuvorigen Stromlos-Schaltung des Gleichstrommotors erkannt worden ist, zum letztendlichen Einfahren des angetriebenen Elements in die Blockposition erneut aktiv bestromt wird, und dass, nachdem das angetriebene Element in seine mechanisch definierte Blockposition gebracht worden ist, eine systemseitige Normierung dieser Blockposition durchgeführt wird.

Bei dem erfindungsgemäßen Verfahren wird das angetriebene Element nicht mit seiner vollen kinetischen Energie in die Blockposition eingefahren. Vielmehr wird der das angetriebene Element antreibende Gleichstrommotor bereits vor Erreichen der systemseitig definierten Blockposition stromlos geschaltet um die kinetische Energie des angetriebenen Elements zu reduzieren. Im Rahmen dieser Ausführungen bedeutet der Begriff "Stromlos-Schalten", daß dem Gleichstrommotor aktiv keine Betriebsspannung zugeführt wird. Dies kann beispielsweise im Wege eines Abschaltens des Gleichstrommotors oder auch eines Umschaltens oder Kurzschließens desselben in einen Generatorbetrieb erfolgen. Nach einer vorbestimmten Zeitspanne, die in Abhängigkeit von weiteren Faktoren variabel ausgebildet sein kann, wird der Gleichstrommotor erneut bestromt, so daß dann das angetriebene Element - nunmehr mit einer erheblich verminderten kinetischen Energie - in die mechanisch definierte Blockposition eingefahren wird. Erst wenn sich das angetriebene Element in seiner mechanisch definierten Blockposition befindet, wird die bestimmungsgemäße systemseitige Normierung bzw. Nachnormierung durchgeführt. Die Nachnormieriung erfolgt somit in einem Zeitpunkt, zu dem sichergestellt ist, daß sich das angetriebene Element mit hinreichender Genauigkeit tatsächlich in seiner mechanisch definierten Blockposition befindet. Durch das Stromlos-Schalten des Gleichstrommotors in einem kurzen Abstand vor Erreichen der tatsächlichen Blockposition und erneutes Bestromen wird das angetriebene Element mit einer sehr viel geringeren kinetischen Energie in die Blockposition eingefahren. Die Gefahr eines Zurückspringens des angetriebenen Elements oder auch ein Zurückfedern der eingesetzten Kraftübertragungsmechanik zwischen dem Gleichstrommotor und dem angetriebenen Element ist somit erheblich reduziert. Daher eignet sich das beanspruchte Verfahren insbesondere auch um eine Nachnormierung in einer Blockposition bei solchen Verstelleinrichtungen durchzuführen, bei denen die angetriebenen Elemente eine hohe kinetische Energie bei ihrer Bewegung aufweisen, was entweder durch einen entsprechend stark ausgeprägten Gleichstrommotor und/oder durch eine hohe, von dem Gleichstrommotor bewegte Masse hervorgerufen werden kann.

Es ist zweckmäßig, die erneute Bestromung des Gleichstrommotors zum letztendlichen Einfahren des angetriebenen Elements in die mechanische Blockposition dann vorzusehen, wenn zuvor der vollständige Auslauf des Ankers des Gleichstrommotors infolge seiner Stromlos-Schaltung erkannt worden ist. Dadurch ist sichergestellt, daß im Zeitpunkt der erneuten Bestromung des Gleichstrommotors zum letztendlichen Einfahren des angetriebenen Gegenstandes in die Blockposition zu Beginn der erneuten Bestromung keine kinetische Energie aufgrund des Stillstandes des angetriebenen Elements inne hat. Eine Erkennung des Zustandes, daß sich der Anker des Gleichstrommotors nicht mehr dreht, kann bevorzugt dadurch erfolgen, daß der Gleichstrommotor mit seiner Stromlos-Schaltung in einen Generatorbetrieb umgeschaltet wird. Das von dem Gleichstrommotor nunmehr generierte Stromsignal ist ein Maß für die Drehgeschwindigleit dies Ankers. Dreht sich der Anker nicht mehr und befindet sich somit ebenso wie das angetriebene Element im Stillstand, ist das Stromsignal gleich null.

Eine systemseitige Normierung in dieser Blockposition kann in Abhängigkeit von den detektierten Bewegungen des angetriebenen Elements erfolgen, die vor dem gewünschten Einfahren des angetriebenen Elements in die Blockposition durchgeführt worden sind. Eine Normierung kann beispielsweise dergestalt erfolgen, daß der aktuelle Positionszähler bezüglich dieser Blockposition geeicht wird, oder daß der Positionszähler im Hinblick auf die zuvor geeichte Position nachnormiert wird. Dies kann abhängig davon sein, ob das angetriebene Element in diese Blockposition eingefahren worden ist, nachdem es mehr oder weniger unmittelbar die andere Blockposition, in der ebenfalls eine Normierung durchgeführt worden ist, eingefahren worden ist, oder ob vor dem Einfahren des angetriebenen Elements in diese Blockposition zahlreiche Bewegungen stattgefunden haben, ohne daß eine Blockposition erreicht worden ist.

Das erfindungsgemäße Verfahren eignet sich insbesondere zum Einsatz im Rahmen einer Positionserkennung einer Verstelleinrichtung zum Öffnen und Schließen einer Fensterscheibe, eines Schiebedaches oder zum Verstellen eines Sitzes in einem Kraftfahrzeug. Insbesondere bei einem Einsatz des erfindungsgemäßen Verfahrens im Rahmen einer Verstelleinrichtung zum Betätigen einer Fensterscheibe eines Kraftfahrzeuges konnte bislang eine Normierung bzw. Nachnormierung nur in der oberen Blockposition erfolgen, da ein mehr oder minder definiertes Einfahren der Fensterscheibe in diese Blockposition durch die die kinetische Energie der Fensterscheibe kompensierende Dichtungsanordnung möglich war, so daß mit hinreichender Genauigkeit angenommen werden konnte, daß zur Normierung die Fensterscheibe sich in ihrer IST-Position tatsächlich in der mechanisch definierten Blockposition (SOLL-Position) befindet. Eine systemseitige Nachnormierung in der unteren Blockposition kann nunmehr durch Einsatz des beanspruchten Verfahrens ebenfalls erfolgen. Erhöht wird dadurch der Bedienkomfort der Verstelleinrichtung. Zur Vermeidung einer zu großen Fehleraddition über mehrere Scheibenbetätigungen hinweg, ohne daß in die obere Blockposition eingefahren worden ist, ist beim vorbekannten Stand der Technik eine Systementnormierung vorgesehen. Bei einer solchen Systementnormierung ist der automatische Scheibenhochlauf blockiert, so daß die Scheibe dann nur noch durch eine manuelle Tasterbetätigung geschlossen werden konnte. Durch die Möglichkeit, nunmehr auch in der unteren Blockposition eine Normierung durchführen zu können, braucht eine systemseitige Entnormierung nur in Ausnahmefällen eingeleitet zu werden. Die statistische Wahrscheinlichkeit, daß bei zahlreichen Fensterheberbetätigungen die Scheibe in die eine oder die andere Blockposition zu einer Nachnormierung des Systems die Fensterscheibe eingefahren wird, ist erheblich erhöht.

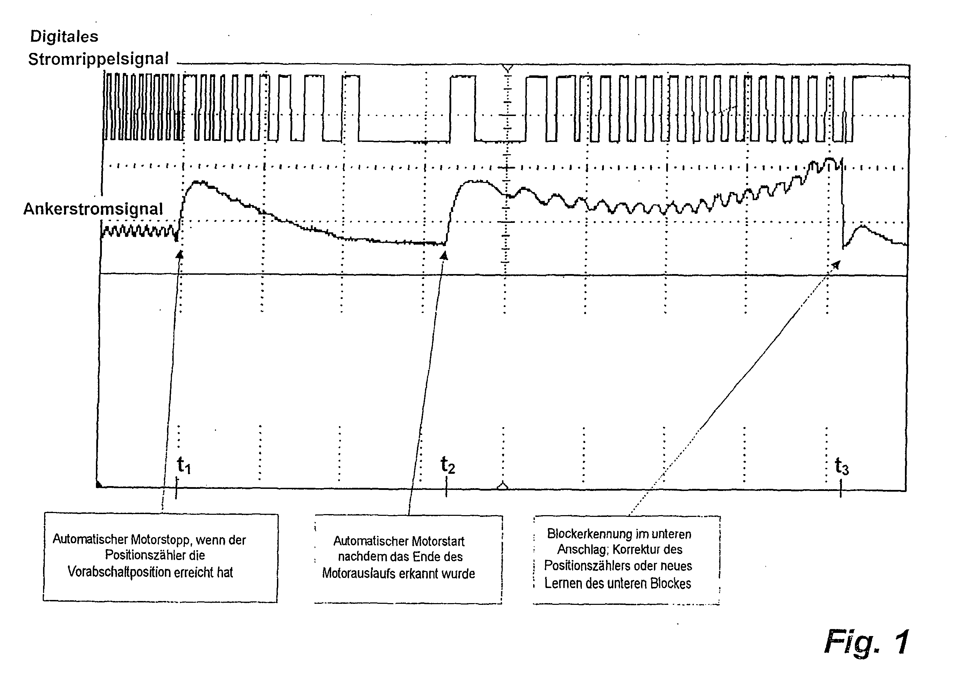

Figur 1 zeigt ein Diagramm mit dem analogen Ankerstromsignal, aus dem sich die unterschiedlichen Zustände des Gleichstrommotors und der Verlauf des beanspruchten Verfahrens ablesen lassen. Das Einfahren einer Fensterscheibe eines Kraftfahrzeuges in die untere Blockposition vollzieht sich demnach wie folgt: In einem Zeitpunkt t₁, in dem zählerseitig erkannt worden ist, daß sich die Fensterscheibe in einem bestimmten Abstand vor der zuvor definierten unteren Blockposition befindet, wird der Gleichstrommotor stromlos geschaltet und in einen Generatorbetrieb umgeschaltet. Der Betrieb des Gleichstrommotors vor dem Zeitpunkt t₁ ist durch seine vorbestimmte Drehzahl bestimmt, die in den Stromspitzen des Ankerstromsignales und auch in dem oberhalb des Ankerstromsignales wiedergegebenen Stromrippelsignales wiedergegeben ist. Im Zuge des Generatorbetriebes des Gleichstrommotors ist auf den Zeitpunkt t₁ folgend zunächst ein hohes und anschließend zunehmend abnehmendes Stromsignal am Gleichstrommotor abgreifbar. In einem Zeitpunkt t₂ ist der Auslauf des Ankers des Gleichstrommotors detektiert worden und es erfolgt eine erneute Bestromung des Gleichstrommotors zum letztendlichen Einfahren der Fensterscheibe in die definierte untere mechanische Blockposition. Dies kann auch mit verminderter Energie erfolgen. Durch die Frequenz der sich auf der Ankerstromkurve bemerkbar machenden Stromrippel wird deutlich, daß die Drehgeschwindigkeit des Ankers in dieser Phase sehr viel geringer ist als diejenige, mit der der Gleichstrommotor vor dem Zeitpunkt t₁ die Fensterscheibe bewegt hat. Das sich Befinden der Fensterscheibe in der unteren Blockposition ist im Zeitpunkt t₃ detektierbar, so daß nunmehr die gewünschte systemseitige Normierung durchgeführt wird.

## Patentansprüche

1. Verfahren zum Bestimmen der Position eines durch die Antriebswelle eines Gleichstrommotors angetriebenen Elements innerhalb einer vorbestimmten Bewegungsstrecke zwischen zwei die Bewegungsstrecke begrenzenden Blockpositionen durch Auswerten der im Ankerstromsignal enthaltenen Stromrippel, bei dem bei einer Bewegung des angetriebenen Elements in eine definierte Blockposition eine systemseitige Normierung durchgeführt wird, **dadurch gekennzeichnet, dass** beim Einfahren des angetriebenen Elements in eine Blockposition der Gleichstrommotor vor Erreichen der systemseitig definierten Blockposition stromlos und damit in einen Generatorbetrieb geschaltet wird, um über das von dem gleichstrommotor generierte Stromsignal das Auslaufen des Gleichstrommotors beobachten zu können, und nach einer vorbestimmten Zeitspanne, wenn der Auslauf des Ankers infolge der zuvorigen Stromlos-Schaltung des Gleichstrommotors erkannt worden ist, zum letztendlichen Einfahren des angetriebenen Elements in die Blockposition erneut aktiv bestromt wird, und dass, nachdem das angetriebene Element in seine mechanisch definierte Blockposition gebracht worden ist, eine systemseitige Normierung dieser Blockposition durchgeführt wird.

2. Verfahren nach Anspruch 1, **dadurch gekennzeichnet, dass** eine systemseitige Normierung in Abhängigkeit von den Bewegungen des angetriebenen Elements erfolgt, die durchgeführt worden sind, bevor damit begonnen wurde, das angetriebene Element in die Blockposition einzufahren.

3. Verfahren nach Anspruch 1 oder 2, **dadurch gekennzeichnet, dass** bei einer geneigten oder im wesentlichen vertikal verlaufenden Bewegungsstrecke des angetriebenen Elements ein Einfahren des angetriebenen Elements in die untere Blockposition in der beanspruchten Weise erfolgt.

4. Verwendung des Verfahrens nach einem der Ansprüche 1 bis 3 zur Positionsbestimmung eines durch eine elektrische Verstelleinrichtung angetriebenen Elements in einem Kraftfahrzeug, etwa zur Positionsbestimmung einer Fensterscheibe, eines Schiebedaches oder eines Sitzes.

5. Verwendung nach Anspruch 4, **dadurch gekennzeichnet, dass** das angetriebene Element eine Fensterscheibe ist und das Verfahren zum Einfahren der Fensterscheibe in die untere Blockposition durchgeführt wird.

## Claims

1. Process for determining the position of an element driven by the drive shaft of a direct current motor within a predefined movement path between two block positions limiting the movement path by means of evaluating the current ripple incorporated in the armature current signal for which a normalisation is conducted on the part of the system whenever the driven element is moved to a defined block position, **characterised in that** when the driven element is moved into a block position, the direct current motor is de-energised prior to reaching the block position defined by the system and is thus switched to a generator mode in order to be able to monitor the rundown of the direct current motor by way of the current signal generated by the direct current motor and, after a predetermined time span, is again actively energised so as to ultimately move the driven element into the block position once the rundown of the armature has been identified as a result of the direct current motor previously having been switched to de-energised, and that, after the driven element has been brought into its mechanically defined block position, a normalisation of this block position is conducted by the system.

2. Process in accordance with Claim 1, **characterised in that** a normalisation is conducted by the system in dependence on the movements of the driven element that were carried out before beginning to move the driven element into the block position.

3. Process in accordance with Claim 1 or Claim 2, **characterised in that** if the movement path of the driven element is slanted or extends essentially vertically, the driven element will be moved to the lower block position by the method claimed.

4. Utilisation of the process in accordance with any of Claims 1 to 3 for determining the position of an element in a motor vehicle which is driven by an electrical adjustment mechanism, for instance for determining the position of a window pane, a sliding roof or a seat.

5. Utilisation in accordance with Claim 4, **characterised in that** the driven element is a window pane and the process is implemented for moving the window pane into its lower block position.

## Revendications

1. Procédé pour la détermination de la position d'un élément commandé par l'arbre de commande d'un moteur à courant continu, sur une section de déplacement prédéterminée, entre deux positions de blocage, qui limitent ladite section de déplacement, par l'évaluation des ondulations de courant, qui sont contenues dans le signal de courant d'induit, procédé dans lequel, lors d'un déplacement de l'élément commandé dans une position de blocage définie, une normalisation est effectuée par le système, **caractérisé en ce que**, lorsque l'élément commandé est amené dans une position de blocage, l'alimentation du moteur à courant continu est coupée et que celui-ci fonctionne dès lors en générateur, avant que la position de blocage définie par le système ait été atteinte, afin que l'arrêt du moteur à courant continu sur sa lancée puisse être observé par l'intermédiaire du signal de courant généré par le moteur à courant continu, et que, quand l'arrêt de l'induit sur sa lancée, à la suite de la coupure de courant précédente du moteur à courant continu, a été détecté, il est réalimenté en courant, après un laps de temps prédéterminé, pour amener finalement l'élément commandé dans sa position de blocage, et qu'une normalisation de cette position de blocage est effectuée par le système, après que l'élément commandé ait été amené dans sa position de blocage mécaniquement définie.

2. Procédé selon la revendication 1, **caractérisé en ce qu'**une normalisation est effectuée par le système en fonction des mouvements de l'élément commandé ayant été exécutés avant que débute l'entraînement de l'élément commandé vers la position de blocage.

3. Procédé selon revendication 1 ou 2, **caractérisé en ce que**, lorsque la section de déplacement de l'élément commandé est inclinée ou essentiellement verticale, ledit élément commandé est amené dans la position de blocage inférieure de la manière revendiquée.

4. Utilisation du procédé selon l'une des revendications 1 à 3 pour la détermination de la position d'un élément commandé par un système de commande électrique, dans un véhicule automobile, comme, par exemple, la détermination de la position d'une glace, d'un toit ouvrant ou d'un siège.

5. Utilisation selon la revendication 4, **caractérisée en ce que** l'élément commandé est une glace et que le procédé est utilisé pour amener ladite glace dans la position de blocage inférieure.
